# EUROPEAN PATENT APPLICATION

(11) **EP 1 408 018 A1**
(43) Date of publication of application: **14.04.2004**
(21) Application number: 02257000.6
(22) Date of filing: 09.10.2002
(51) Int. Cl.: C04B 35/01

(54) **Supported perovskite-type oxides and methods for preparation thereof**

(71) Applicant: THE BOC GROUP, INC., Murray Hill, New Providence, New Jersey 07974-2082 (US)
(72) Inventor: Zeng, Yongxian, North Plainfield, NJ 07060 (US); Wolf, Rudolph Jon, Lebanon, NJ 08833 (US); Fitch, Frank Roger, Bedminster, NJ 07921 (US); Bulow, Martin, Basking Ridge, NJ 07920-3043 (US); Tamhankar, Satish Shankar, Scotch Plains, NJ 07076 (US); Acharya, Divyanshu Rasiklal, Bridgewater, NJ 08807 (US)
(74) Representative: Wickham, Michael

(57) **Abstract**

Supported perovskite-type oxides of the general formula of AₓA'_{x'}B_{y}B'_{y'}O_{3-δ}, wherein A is an ion of a metal of Group IIIa or IIIb of the periodic table of elements or mixtures thereof; A' is an ion of a metal of Groups Ia or IIa of the periodic table or mixtures thereof; B and B' are ions of a d-block transition metal of the periodic table or mixtures thereof; x, x', y and y' vary from 0 to 1; 0.95<x+x'<1.05; 0.95<y+y'<1.05; δ is the deviation from ideal oxygen stoichiometry may be employed in high temperature air separation processes and in reforming processes, particularly catalytic autothermal reforming processes.

## Description

This invention relates generally to supported perovskite-type oxides, for hydrocarbon oxidation, steam methane reforming, auto-thermal reforming, cyclical auto-thermal reforming (CAR) and high temperature air separation.

Most perovskite-type ceramic materials with a general formula of ABO_{3-δ} are mixed electronic and oxygen ion conductors at high temperature and are known to be suitable materials for making dense oxygen semi-permeable membranes. These membranes hold promising applications in air separation and partial oxidation of hydrocarbons to hydrogen and carbon monoxide. Despite tremendous interest and efforts from both academic institutes and industrial companies, the applications of dense ceramic membranes made of perovskite-type oxides are still facing many technical challenges. These include fabrication of pin-hole free dense membranes, developing high temperature sealing and joining techniques to integrate a particular membrane with other parts of the reactor system, and controlling the chemical and mechanical stability of the membrane during the harsh operating conditions. In addition, there are issues related to safety and economy of ceramic membrane reactor applications.

We have discovered that perovskite-type oxides in non-membrane form exhibit both good oxygen storage capability and/or catalytic properties for high-temperature air separation, total combustion, partial oxidation and steam reforming reactions. Perovskite-type oxides have been proposed for use in non-membrane form for a high-temperature air separation process as well as in a cyclic auto-thermal reforming (CAR) process. In the CAR process, air and natural gas/steam mixture are contacted alternately with perovskite-type oxides. We have further discovered that perovskite-type oxides, when supported by porous support, show higher reactivity and faster oxygen exchange rate than the unsupported ones.

According to the present invention there is provided a composition comprising a supported perovskite-type oxide having a general formula AₓA'_{x'}B_{y}B'_{y'}O_{3-δ}, wherein:
A is an ion of a metal of Group IIIa or IIIb of the periodic table of elements or mixtures of these;
A' is an ion of a metal of Groups la or IIa of the periodic table of elements or mixtures of these;
B and B' are ions of a d-block transition metal of the periodic table of elements or mixtures of these;
x, x', y and y' range from 0 to 1.05;
0.95<x+x'<1.05;
0.95<y+y'<1.05; and
δ is the deviation from ideal oxygen stoichiometry.

The supported perovskite-type oxides according to the invention are not in membrane form have high oxygen-storage capability and oxygen exchange rate at high temperature while having good catalytic properties for oxidation reactions. The supported perovskite-type oxides according to the invention have an improved performance compared to that of the unsupported ones. These supported perovskite-type oxides are particularly useful for high temperature air separation processes, via pressure swing adsorption (PSA) or thermal swing adsorption (TSA), and for the conversion of hydrocarbons into products that contain hydrogen and carbon monoxide, via partial oxidation, steam reforming, or auto-thermal reforming, in continuous or cyclical operations (CAR process). Methods for making supported perovskite-type oxides also forms part of the present invention.

The perovskite-type materials according to the invention can be A-site or B-site rich compositions as long as the perovskite phase structure is maintained. For a general composition of AₓA'_{x'}B_{y}B'_{y'}O_{3-δ}, A-site rich means x+x'>1 while y+y'< or =1, and B-site rich means x+x'< or = 1 while y+y' > 1.

In general, most perovskite-type oxides have certain oxygen storage and catalytic properties. Their compositions are critical to these properties. In a preferred embodiment, the perovskite-type oxides have A-sites containing La and Sr ions and B-sites containing Ni, Co and Fe ions. Such perovskite-type oxides show very good oxygen storage and catalytic properties for cyclic autothermal reforming (CAR) processes. In a more preferred embodiment, the perovskite-type oxides have a formula of LaₓSr_{x'}Ni_{y}Co_{y'} Fe_{y"}O_{3-δ}, in which x, x', y, y' and y" are all less than 1.05 but greater than 0. In the most preferred embodiment, the perovskite-type oxides have a formula of LaₓSr_{x'}Ni_{y}Co_{y'} Fe_{y"}O_{3-δ}, in which 0.5<x<1, 0.1<x'<0.5, 0.2<y<0.8, 0.2<y'<0.6 and 0.1<y"<0.5.

In a preferred embodiment, the perovskite-type oxides have particle sizes in the range of about 0.01 to 100 microns. In a more preferred embodiment, the perovskite-type oxides have particle sizes in range of about 0.1 to 50 microns.

There is a wide range of appropriate carriers that vary widely in their porosity that can be used to support perovskite-type oxides. In a preferred embodiment, the support materials are selected from: (1) metal oxides such as alpha-Al₂O₃, gamma-Al₂O₃, eta-Al₂O₃, ZrO₂, MgO, CeO₂, CaO and SiO₂; (2) aluminates such as MgAl₂O₄ and CaAl₂O₄; (3) metal aluminum silicates such as cordierites; (4) metals such as porous high nickel containing alloy. In a more preferred embodiment, the support materials are selected from alpha- Al₂O₃, gamma- Al₂O₃ and eta- Al₂O₃ or mixtures thereof. In another more preferred embodiment, the support materials are selected from cordierites such as Mg₂Al₃ [AlSi₅O₁₈] and Fe₂Al₃ [AlSi₅O₁₈], or related derivatives stable at high temperature. In yet another more preferred embodiment, the support material is MgAl₂O₄. The thermal expansion properties of the supports have to be controlled carefully to ensure stability of the final product with regard to temperature changes.

In a preferred embodiment, the supported perovskite-type oxides can be further coated on one or more other support materials to achieve an increase in performance, and enhancement of thermal and mechanical properties.

In another preferred embodiment of the present invention, the support material has particle sizes in the range of about 0.1 to 10,000 microns. In a more preferred embodiment, the support material has particle sizes in the range of about 5 to 1,000 microns.

The present invention also provides for methods of preparing supported perovskite-type oxides. The methods comprise dispersing perovskite-type oxides onto the selected support with or without the aid of a liquid solvent. The methods further comprise treating the mixture of perovskite-type oxide and support at a high temperature to form close bonding between adjacent particles of perovskite-type oxides and the support.

The supported perovskite-type oxides are typically provided with appropriate macroscopic particle shapes. In a preferred embodiment, the macroscopic supported perovskite-type oxides particles are in the form of porous or non-porous bodies selected from beads, rings, extrudates, and pellets; from honeycomb-type structures with uniform channels and from monolithic ones with random porosity and/or foam structure. In a more preferred embodiment, the shapes of the supported perovskite-type oxides are selected from those of monolithic structures and extrudates particularly with cylindrical shape. The extrudates are formed by extrusion, particularly screw extrusion. Alternatively, there are various pressing procedures, which can be utilized to shape the perovskite-type oxides, and these procedures provide good mechanical stability of the resulting shaped material.

Appropriate additives will help the shape forming process and control the desired pore structure within the shape. In a preferred embodiment, the additives are selected from water, organic solvents, cellulose, polymers, synthetic and naturally formed fibers, starch and metal oxides. In a more preferred embodiment, the additives are water, various types of cellulose with particle sizes compatible with those of the components to be shaped, about 0.1 to 1 wt % MgO and about 0.1 to 0.5 wt % TiO₂.

Methods for synthesis of the perovskite-type materials are well known from the literature. Conventional methods that may be used for the synthesis are: (1) solid-state reaction; (2) combustion synthesis; (3) citrate method; (4) co-precipitation method; (5) sol-gel method, and (5) spray-pyrolysis method. Although different synthesis methods may result in different particle sizes and surface properties, they produce the perovskite-type oxides with the same phase structure, i.e. perovskite-type structure, which can be characterized by X-ray diffraction (XRD) measurement. The appropriate particle sizes of perovskite-type oxide powders for making supported perovskite-type oxides are in the range of 0.01 to 100 microns.

Preferred support materials are required: (1) to be resistant to high temperature, i.e., 600 to 1200° C; (2) to maintain appropriate pore structure at high temperature; (3) to have a good affinity for perovskite-type oxides but not to undergo significant reactions with perovskite-type oxides; (4) to have good mechanical strength at both low and high temperatures; and (5) to have a low thermal expansion. The suitable support materials include: (1) metal oxides such as alpha-Al₂O₃, gamma- Al₂O₃, eta-Al₂O₃, ZrO₂, TiO2, MgO, CeO₂, CaO and SiO₂ ; (2) aluminates such as MgAl₂O₄ and CaAl₂O₄; (3) metal aluminum silicates, such as cordierites; (4) metals such as porous high nickel containing alloy. The preferred selections are alpha- Al₂O₃, gamma- Al₂O₃ and eta- Al₂O₃ and mixtures thereof. The other class of preferred supports are cordierites such as Mg₂Al₃ [AlSi₅O₁₈] and Fe₂Al₃ [AlSi₅O₁₈], or related derivatives stable at high temperature. The particle size of the supports should be compatible with the particle size of the perovskite powder. The appropriate particle size range is about 1 to 10,000 microns.

In a preferred embodiment, the supported perovskite-type oxides can be further coated on one or more other support materials to achieve an increase in performance, thermal and mechanical properties. In another preferred embodiment, the supported perovskite-type oxides can be further coated or impregnated with metals selected from transition and noble metals, such as Rh, Pt, Ag, etc.

Once a perovskite-type powder has been synthesized and the support selected, the task is to coat the perovskite-type powder onto the support. The methods to do this include: (1) dry coating; and (2) wet coating. In dry coating, the perovskite-type powders and support particles are physically mixed together and uniformly distributed. This mixture is then subjected to high temperature sintering, resulting in strong bonding between the perovskite and the support. In wet coating method, both perovskite and support are dispersed in a liquid solvent to form a uniform suspension. The solid mixture after filtration is then dried and sintered. The wet coating method also includes sol-gel method in which the perovskite-type oxides (or precursors) are synthesized in a form of sol. The perovskite-type oxides in the form of sol are then coated or impregnated onto the support. The preferred coating method of this invention is that of dry coating.

The supported perovskite-type oxides are formed into appropriate shapes to achieve higher mass and heat transfer rates, higher surface area, enhanced resistance to attrition and fluidization compared to those features of the perovskite-type oxides without support. These shapes include beads, rings, extrudates, pellets with any cross-sectional shapes with or without holes, honeycomb structures with uniform channels and monolithic ones with random porosity and/or foam structure. The preferred shapes of this invention are extrudates and monolithic structures. The monolithic and honeycomb structures can be used either in a single piece or stacked pieces packed randomly in a reactor bed. There are many forming methods to fabricate those shaped structures, such as extrusion using dies with differently shaped channels, agglomeration, tape casting, foam casting, etc. The preferred shape forming method in this invention is extrusion, particularly screw extrusion. Alternatively, there are a number of pressing procedures which also provide good mechanical stability which can be utilized to shape the perovskite-type oxides.

In many cases, solvents, binders, sintering aids and pore-forming additives are added into the supported perovskite-type oxide powders before shaping the material. This is to optimize the plasticity of the materials and to control the green strength of the shaped material as well as to promote the sintering and to control the pore structure of the final products. These additives and aids include: water, organic solvents, various types of celluloses with particle sizes compatible with those of the components to be shaped, polymers, fibers of both synthetic and naturally formed, starches and small amount of metal oxides such as MgO and TiO₂. The selected combination and the amounts of these additives and aids are critical to achieve desired products. After shape forming, the green body is subjected to drying, calcination and sintering to remove the organic additives and gain good bonding and mechanical strength.

The pore size distribution and surface area of the supported perovskite-type oxides are critical to their performance. The preferred pore size and the surface area are respectively in the range of about 0.001 to 10 microns and a surface area in the range of about 1 to 200 m²/g. In a particularly preferred embodiment, the supported perovskite oxides have a pore size in the range of about 0.01 to 1 microns and a surface area in the range of about 1 to 50 m²/g.

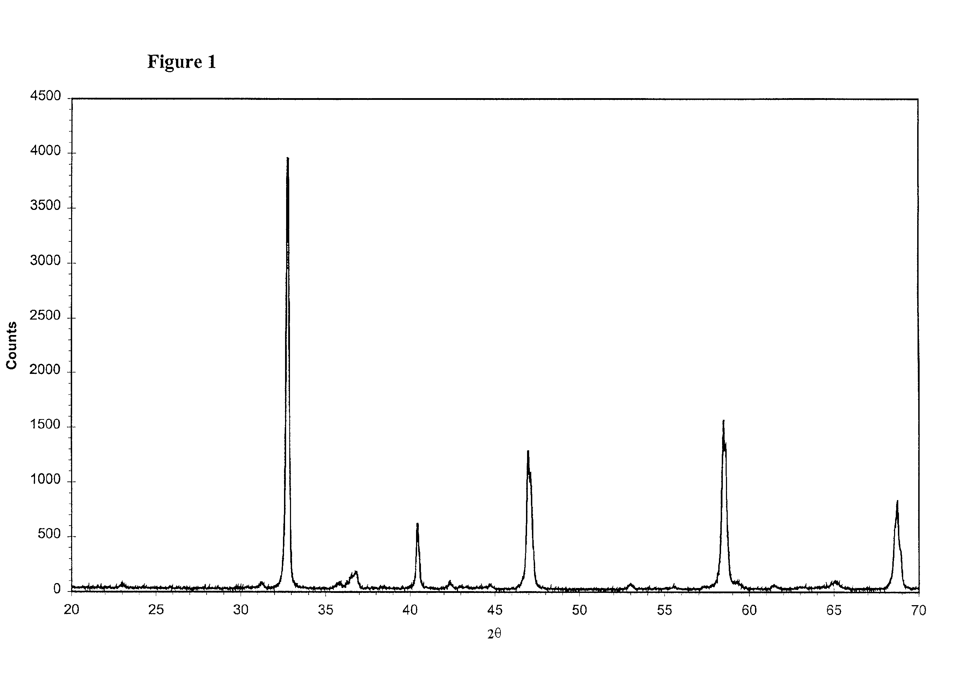

The following examples of making perovskite-type oxide powders and supported perovskite-type oxide extrudates further illustrate the invention and refer to Figures 1 to 4 of the accompanying drawings which are all representations of X-ray diffraction patterns. They should be considered merely as examples of the present invention and not as limiting the scope thereof.

### Example 1. Preparation of 6.56 g La_{0 5}Sr_{0 5}Co_{0.5}Fe_{0 5}O_{3-δ} perovskite-type oxide by co-precipitation method.

The preparation started with respectively dissolving 4.87 g La(NO₃)₃, 3.17 g Sr(NO₃)₂, 4.36 g Co(NO₃)₂.6H₂O, 6.06 g Fe(NO₃)₃ in 50 ml deionised water and 15.13 g oxalic acid in 100 ml deionised water. The above-made metal nitrate solution was dropped into the above-made oxalic acid solution at a rate of 0.5 drop/second while stirring until finished. A solid precipitate was formed and was collected by filtration and dried at 100° C overnight in an oven, and then placed in a furnace and heated at 20° C/min up to 600° C. The solid was held at 600° C for 1 hour, resulting in pyrolysis. The residue was calcined at 900° C for 2 hours. The perovskite-type powder of La_{0.5}Sr_{0.5}Co_{0.5}Fe_{0.5}O_{3-δ} was thus produced. Its XRD pattern is shown in Figure 1.

### Example 2. Preparation of 12.2 g La_{0.2}Sr_{0.8}Co_{0.5}Fe_{0.5}O_{3-δ} perovskite-type oxide by citrate method.

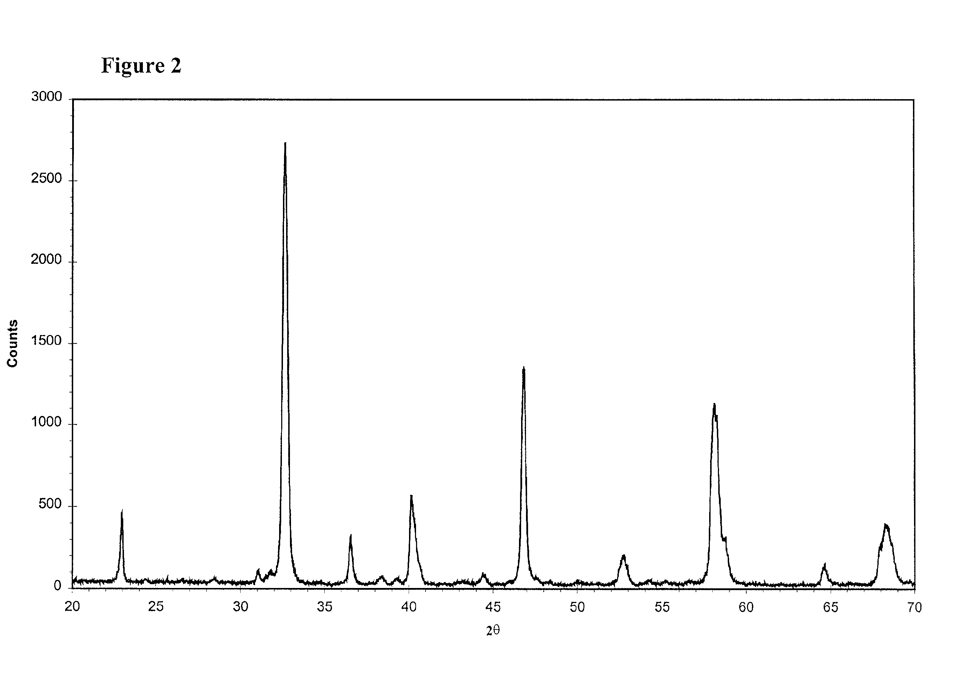

The preparation was started by dissolving 3.9 g La(NO₃)₃, 10.16 g Sr(NO₃)₂, 8.73 g Co(NO₃)₂6H₂O, 12.12 g Fe(NO₃)₃ into 800 ml dilute HNO₃ solution (720 ml deionised water and 80 ml concentrated HNO₃). 34.6 g citric acid was added to the above-made metal nitrate solution. The solution was then heated to 90 - 110° C with reflux for 3 hours. After that, water was gradually removed from the solution by evaporation until a gel-like "polymer" was formed. This gel was collected and dried at 90° C overnight in an oven, and then subjected to a temperature of 500° C for 1 hour. The charred material was collected, ground and sintered at 900° C for 10 hour. The perovskite-type powder of La_{0.5}Sr_{0.5}Co_{0 5}Fe_{0.5}O_{3-δ} was thus produced. Its XRD pattern is shown in Figure 2.

### Example 3. Preparation of 20 g La_{0.8}Sr_{0.2}Co_{0.4}Ni_{0.4}Fe_{0.2}O_{3-δ} perovskite-type oxide by combustion synthesis method.

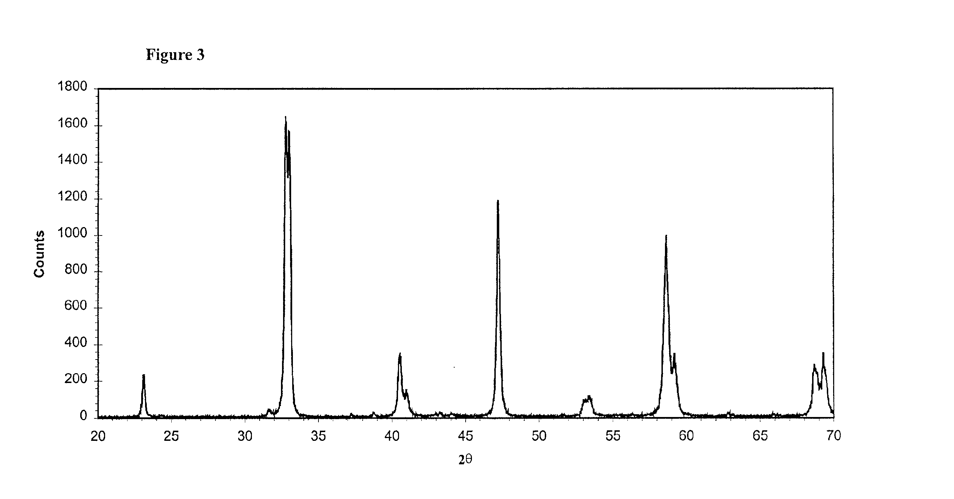

The preparation was started by dissolving 29.5 g La(NO₃)₃.6H₂O, 3.60 g Sr(NO₃)₂, 9.91 g Ni(NO₃)2.6H₂O, 9.91 g Co(NO₃)₂6H₂O, and 6.88 g Fe(NO₃)₃.9H₂O into 400 ml deionised water. 32.0 g glycine (H₂NCH₂CO₂H) was then added to the above-made solution. This solution was heated to 90 - 100° C while stirring for about 3 hours with reflux. The water was then evaporated and a concentrated solution of about 100 ml was obtained, which was transferred into an alumina crucible and placed into a box furnace pre-heated at 250° C. The solution was further concentrated and formed a gel-like material, which was quickly combusted as the furnace temperature was increased to 400° C. The residue was collected and ground into powder. This powder was then sintered at 900° C for 8 hours. A perovskite-type powder of La_{0.8}Sr_{0.2}Co_{0.4}Ni_{0.4}Fe_{0.2}O_{3-δ} was thus produced. Its XRD pattern is shown in Figure 3.

### Example 4. Preparation of 500 g La_{0.8}Sr_{0.2}Co_{0.4}Ni_{0.4}Fe_{0.2}O_{3-δ} perovskite-type oxide by solid state reaction method.

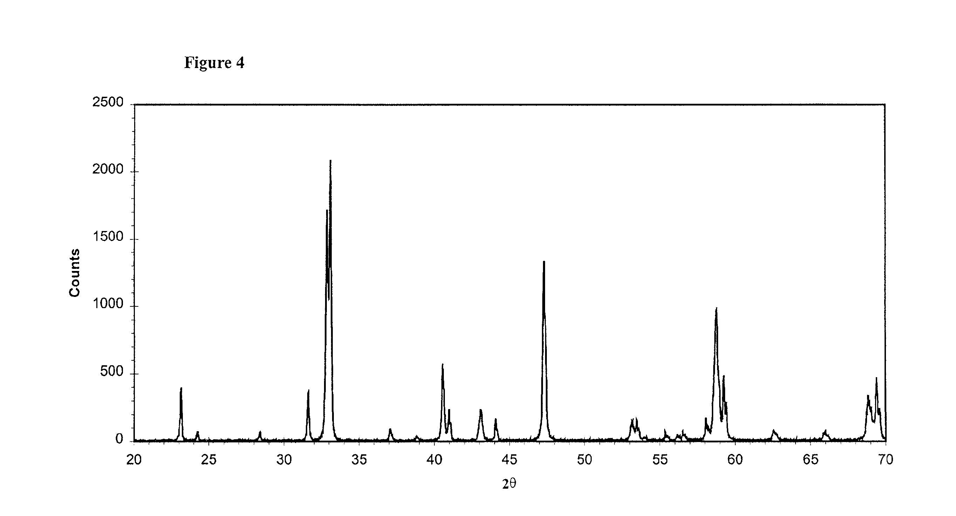

A perovskite-type oxide in powder form was prepared first by mixing of corresponding metal oxides and then under repeated steps of sintering, ball-milling and filtration for three times. The sintering steps lasted for 8 hours at ramp and cooling rates of 3° C/min. The sintering temperatures in 3 repeat steps were, respectively, 1000° C, 1250° C and 1300° C, and the sintering time was 8 hours. The first sintering was conducted right after dry-mixing of La₂O₃, Sr(OH)₂8H₂O, Ni₂O₃, Co₂O₃ and Fe₂O₃. The ball milling of the material was carried out with grinding the media and water after each sintering. The solid was collected by filtration after ball milling. The filtration cake was dried at 100°C over night before it was subjected to the next sintering. After the last ball-milling, the dried filtration cake was crushed and ground into fine powder. The powder had a perovskite-type phase structure as shown in Figure 4.

### Example 5. Fabrication of La_{0.8}Sr_{0.2}Co_{0.4}Ni_{0.4}Fe_{0.2}O_{3-δ} perovskite-type oxide extrudates without support.

The perovskite-type oxide powder made in Example 4 was transferred into a slurry after addition of about 5 wt % hydroxyethyl cellulose and 14.5 wt % water. The cellulose was added first and well mixed with the solid. Water was then sprayed in, little by little, with intermediate stirring and mixing to preserve the homogeneity of the mixture and to avoid agglomeration. Thus obtained slurry was aged overnight before it was loaded into an extruder and transformed into extrudates (3.2 mm diameter, 6.35 mm long) (1/8" diameter and ¼" long). The extrudates were dried in an oven at 90° C for about 2 hr. They were then heated at 3°C/min to 600° C and kept at this temperature for 5 hr. After the cellulose was burned out, the extrudates were further sintered at 1350° C for 8 hours. The final product of La_{0.8}Sr_{0.2}Co_{0.4}Ni_{0.4}Fe_{0.2}O_{3-δ} extrudes appeared to be dense and mechanically strong.

### Example 6. Fabrication of 50wt% alpha-Al₂O₃ supported La_{0.8}Sr_{0.2}Co_{0.4}Ni_{0.4}Fe_{0.2}O_{3-δ} perovskite-type oxide extrudates with support.

The perovskite-type oxide powder made in Example 4 was well mixed with equal amount of alpha-Al₂O₃ powder (100 mesh). The mixture was then sintered at 1300° C for 8 h with ramp and cooling rates of 3°C/min. After sintering, the color of the mixture changed from black to dark blue. The resulting powder was turned into a slurry after addition of about 5 wt % hydroxyethyl cellulose and 20.5 wt % water. The cellulose was added first and well mixed with the solid. Water was then sprayed in, little by little, with intermediate stirring and mixing to preserve the homogeneity of the mixture and to avoid agglomeration. Thus obtained slurry was aged overnight before it was loaded into an extruder and transformed into extrudates (1/8" diameter and ¼" long). The extrudates were dried in an oven at 90° C for about 2 hr. They were then heated at 3° C/min to 600° C and held at this temperature for 5 hr. After cellulose was burned out, the extrudates were further sintered at 1350° C for 8 h. The final product of 50 wt % LSNCF-82442/alpha-Al₂O₃ extrudes appeared to be porous and mechanically strong.

### Example 7. Fabrication of 30wt% alpha-Al₂O₃ and 10wt% gamma-Al₂O₃ supported La_{0.8}Sr_{0.2}Co_{0.4}Ni_{0.4}Fe_{0.2}O_{3-δ} perovskite-type oxide extrudates with support.

The perovskite-type oxide powder made in Example 4 was well mixed with alpha-Al₂O₃ powder (100 mesh) at a ratio of 6:3 by weight. The mixture was sintered at 1050° C for 8 h with ramp and cooling rates of 3° C/min. After sintering, the color of the mixture changed from black to dark blue. The resulting powder was well mixed with gamma-Al₂O₃ at a ratio of 9:1 by weight. The mixture was then turned into a slurry after addition of about 5 wt % hydroxyethyl cellulose and 20.5 wt % water. The cellulose was added first and well mixed with the solid. Water was then sprayed in, little by little, with intermediate stirring and mixing to preserve the homogeneity of the mixture and to avoid agglomeration. Thus obtained slurry was aged overnight before it was loaded into an extruder and transformed into extrudates (3.2 mm diameter and 6.35 mm long) (1/8" diameter and ¼" long). The extrudates were dried in an oven at 90° C for about 2 hr. They were then heated at 3° C/min to 600° C and held at this temperature for 5 hr. After cellulose was burned out, the extrudates were further sintered at 1350° C for 8 h. The final product of 60 wt % perovskite-type oxide referred to in Table 1 below as "LSNCF-82442/30wt% alpha-Al₂O₃/10wt% gamma-Al2O3 extrudates appeared to be porous and mechanically strong.

### Example 8. Comparison of the performance of unsupported and supported La_{0.8}Sr_{0.2}Co_{0.4}Ni_{0.4}Fe_{0.2}O_{3-δ} perovskite-type oxide extrudates for cyclic auto-thermal reforming (CAR) process.

200 cm³ of unsupported and alpha-Al₂O₃-supported La_{0.8}Sr_{0.2}Co_{0.4}Ni_{0.4}Fe_{0.2}O_{3-δ} perovskite-type oxide extrudates prepared in Example 5 and Example 6 were loaded separately in a fixed bed reactor for two comparison experiments. For cyclic auto-thermal reforming process, a flow of air and a flow of methane/steam mixture were fed alternately into the reactor. Oxygen was retained by the perovskite-type oxide during the air flow step in the form of solid phase lattice oxygen, which was reacted with methane/steam mixture in the subsequent step to form a product containing hydrogen and carbon monoxide. Table 1 gives the results of the experiments over unsupported and supported extrudates. As shown in the table, the supported extrudates had much higher methane conversion and hydrogen and carbon monoxide concentration in the product.

**Table 1**

| CAR Process over LSNCF-82442 with and without Support | | | | | | | | | | |
|---|---|---|---|---|---|---|---|---|---|---|
| Furnace Temp. | H₂O /CH4 | Product Composition (%) by volume | | | | Carbon | Conversion | | (H₂+CO)/CH₄ | |
| oC | | H₂ | CH₄ | CO₂ | CO | Balance | CH₄ | H₂O | Real | Ideal |
| **50wt% LaSrNiCoFe-82442/Al**_{**2**}**O**_{**3**} | | | | | | | | | | |
| 825 (Co) | 2.1 | 69.0 | 3.22 | 8.65 | 19.1 | 3.17 | 89.6 | 17.1 | 2.84 | 3.17 |
| 825 (Re) | 2.1 | 68.2 | 3.66 | 9.58 | 18.6 | -6.18 | 88.5 | 11.3 | 2.73 | 3.08 |
| 825 (Co) | 1.5 | 67.3 | 4.52 | 7.25 | 20.9 | -1.57 | 86.2 | 20.4 | 2.70 | 3.13 |
| 825 (Re) | 1.5 | 66.0 | 4.60 | 8.48 | 20.9 | -2.26 | 86.4 | 11.1 | 2.55 | 2.95 |
| 800 (Co) | 2.1 | 66.5 | 5.37 | 7.46 | 20.6 | -1.02 | 83.9 | 19.4 | 2.60 | 3.10 |
| 800(Re) | 2.1 | 65.7 | 5.41 | 8.55 | 20.3 | -1.42 | 84.2 | 13.9 | 2.51 | 2.98 |
| 800(Co) | 2.1 | 66.3 | 5.87 | 7.25 | 20.5 | 0.18 | 82.6 | 21.7 | 2.58 | 3.13 |

| **Pure LaSrNiCoFe-82442 perovskite** | | | | | | | | | | |
|---|---|---|---|---|---|---|---|---|---|---|
| 800 (Co) | 2.1 | 64.5 | 9.0 | 12.5 | 14.0 | 0.9 | 74.8 | 16.2 | 2.2 | 3.0 |
| 800 (Re) | 2.1 | 62.7 | 10.7 | 12.6 | 13.9 | 0.6 | 71.2 | 12.9 | 2.1 | 2.9 |
| 800 (Co) | 3.3 | 61.8 | 11.4 | 14.7 | 12.1 | 2.7 | 70.1 | 7.7 | 1.9 | 2.8 |
| 800 (Re) | 3.3 | 59.8 | 13.5 | 14.7 | 12.0 | 0 | 66.4 | 4.8 | 1.8 | 2.7 |
| Note: ideal (H₂+CO)/CH₄ was under assumption of 100% CH₄ conversion Co: Co-current flow; Re: Reverse flow | | | | | | | | | | |

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit and scope of the present invention.

## Claims

1. A composition comprising a supported perovskite-type oxide having a general formula AₓA'_{x'}B_{y}B'_{y'}O_{3-δ}, wherein:
A is an ion of a metal of Group IIIa or IIIb of the periodic table of elements or mixtures of these;
A' is an ion of a metal of Groups la or IIa of the periodic table of elements or mixtures of these;
B and B' are ions of a d-block transition metal of the periodic table of elements or mixtures of these;
x, x', y and y' range from 0 to 1.05;
0.95<x+x'<1.05;
0.95<y+y'<1.05; and
δ is the deviation from ideal oxygen stoichiometry.

2. A composition according to claim 1 wherein A is an La ion, A' is an Sr ion; and B and B' are selected from the group consisting of Ni, Co and Fe ions.

3. A composition according to claim 1 wherein said supported perovskite-type oxide has the formula LaₓSr_{x'}Ni_{y}Co_{y'} Fe_{y"}O_{3-δ}, wherein x, x', y, y' and y" are all smaller than 1.05 but greater than 0.

4. A composition according to claim 3 wherein 0.5<x<1, 0.1<x'<0.5, 0.2<y<0.8, 0.2<y'<0.6 and 0.1<y"<0.5.

5. A composition according to any one of the preceding claims wherein said perovskite-type oxide has particle sizes in the range of about 0.01 to 100 microns.

6. A composition according to any one of the preceding claims wherein said support is selected from the group consisting of (1) porous inorganic materials which are stable at temperatures in the range of 600 to 1200° C; (2) metal oxides; (3) aluminates; (4) metal aluminum silicates, and (5) metals.

7. A composition according to claim 6 wherein said support has particle sizes in the range of about 1 to 10,000 microns.

8. A composition according to any one of the preceding claims which is prepared by dispersing the perovskite-type oxide onto the selected support with or without the aid of a liquid solvent; and treating the mixture of perovskite-type oxide and support at a temperature of 600 to 1,500° C.

9. A composition according to any one of the preceding claims wherein said supported perovskite-type oxide is in the form of porous or non-porous bodies comprising beads, rings, pellets or extrudates, of a honeycomb with uniform channels or of a monolith with random porosity and a foam structure.

10. A composition according to claim 9, having pore sizes in the range of about 0.001 to 10 microns, and a surface area in the range of 1 to 200 m²/g.

11. A composition according to any one of the preceding claims, wherein the perovskite-type oxide comprises a coating on one or more support materials.

12. A composition according to claim 11, further coated or impregnated with at least one metal selected from the group consisting of Rh, Pt, and Ag.

13. A method of separating a gas component from a mixture of gases by either of pressure swing adsorption or thermal swing adsorption comprising passing said gas mixture through a composition as claimed in any one of the preceding claims.

14. A method for converting hydrocarbons into hydrogen and carbon monoxide by partial oxidation, steam reforming, or auto-thermal reforming, taking place in either continuous or cyclic operations by contacting said hydrocarbons with a composition as claimed in any one of the preceding claims.
